Europäisches Patentamt

European Patent Office

Office européen des brevets

(11) Veröffentlichungsnummer : **0 079 543**
**B1**

# EUROPÄISCHE PATENTSCHRIFT

(45) Veröffentlichungstag der Patentschrift :
12.11.86

(51) Int. Cl.⁴ : **B 60 T 15/20**

(21) Anmeldenummer : 82110204.3

(22) Anmeldetag : 05.11.82

(54) Druckmittel-Bremsanlage.

(30) Priorität : 12.11.81 DE 3144961

(43) Veröffentlichungstag der Anmeldung :
25.05.83 Patentblatt 83/21

(45) Bekanntmachung des Hinweises auf die Patenterteilung : 12.11.86 Patentblatt 86/46

(84) Benannte Vertragsstaaten :
DE FR GB SE

(56) Entgegenhaltungen :
DD-A-  110 221
DE-A- 2 931 360
DE-B-    10 827
DE-B- 1 555 082

(73) Patentinhaber : ROBERT BOSCH GMBH
Postfach 50
D-7000 Stuttgart 1 (DE)

(72) Erfinder : Grauel, Ingolf, Dipl.-Ing.
Lessingstrasse 6
D-7143 Vaihingen/Enz (DE)
Erfinder : Kulke, Günter
Hellerweg 20
D-7300 Esslingen (DE)
Erfinder : Müller, Egbert, Dr. Ing.
Schillerstrasse 12
D-7147 Hochdorf (DE)
Erfinder : Stumpe, Werner
Goerdelerstrasse 10
D-7014 Kornwestheim (DE)

EP 0 079 543 B1

## Beschreibung

### Stand der Technik

Die Erfindung geht aus von einer Druckmittel-Bremsanlage nach der Gattung des Hauptanspruchs. Eine derartige Bremsanlage ist bekannt (DE-B-1 555 082).

Bei dieser bekannten Bremsanlage ist jedem der Relaisventile das gleiche Paar Steuerkammern zugeordnet, wobei ein mechanisches Verteilerstück als Druckübertrager verwendet ist. Eine solche Konstruktion ist aber nicht ausfallsicher, weil bei einem Klemmen des Verteilerstückes oder des das Verteilerstück unmittelbar betätigenden Kolbens beide Bremskreise ausfallen.

Der Erfindung liegt die Aufgabe zugrunde, diesen Nachteil zu vermeiden und eine Druckmittel-Bremsanlage zu schaffen, die sich durch eine große Ausfall-Sicherheit auszeichnet. Dabei soll auch bei Ausfall einer Relaisventil-Betätigung die andere unbehindert noch voll wirksam sein.

Diese Aufgabe wird gemäß der Erfindung bei einer gattungsgemäßen Druckmittel-Bremsanlage durch die kennzeichnenden Merkmale des Patentanspruchs gelöst.

### Zeichnung

Mehrere Ausführungsbeispiele der Erfindung sind in der Zeichnung dargestellt und in der nachfolgenden Beschreibung näher erläutert. Es zeigen : Figur 1 eine Druckmittel-Bremsanlage mit zweikreisiger Druckluft-Betätigung, Figur 2 eine Druckmittel-Bremsanlage, in einem Kreis mit Druckluft, in anderem Kreis mit Hydraulik und Figur 3 eine Druckmittel-Bremsanlage, in einem Kreis mit Druckluft, im anderen Kreis elektrisch.

### Beschreibung der Ausführungsbeispiele

Eine Zweikreis-Druckluft-Bremsanlage ist mit einem Kompressor 1 und einem diesem nachgeschalteten Vierkreis-Schutzventil 2 ausgerüstet. Vom Vierkreis-Schutzventil 2 nehmen vier Versorgungs-Leitungen 3, 4, 5, 6 ihren Ausgang, von denen zwei (3, 4) zu Zugwagen-Vorratsbehältern 7, 8, eine (5) zu einem Anhänger-Vorrats-Kupplungskopf 9 und eine (6) zu einem nicht dargestellten Nebenverbraucher führen. Die beiden Vorratsbehälter 7 und 8 werden nachfolgend als Druckmittel-Quellen bezeichnet.

Jeder Druckmittel-Quelle 7 und 8 ist ein Relaisventil 10 bzw. 11 nachgeschaltet, in dem der Druck der Druckmittel-Quelle 7 bzw. 8 ansteht. Von jeder Versorgungs-Leitung 3 und 4 ist eine Zweigleitung 12 bzw. 13 zu einem Mehrkreis-Bremsventil 14 geführt, das Steuermittel in zwei Steuerleitungen 15 und 16 einsteuern kann. Diese Steuerleitungen 15 und 16 sind beide sowohl zu dem Relaisventil 10 als auch zu dem Relaisventil 11 gezogen und führen dort in je eine Steuerkammer 17 und 18 bzw. 19, 20. Außerdem verlaufen die beiden Steuerleitungen 15 und 16 auch zu einem Anhänger-Steuerventil 21, dessen Ansteuerung hier jedoch keine Rolle spielt.

Jedem Relaisventil 10 bzw. 11 ist eine Gruppe von zwei Bremszylindern 22 und 23 bzw. 24 und 25 nachgeschaltet, die eine für eine Vorderachse 26, die andere für eine Hinterachse 27.

### Wirkungsweise

Beim Betätigen des Mehrkreis-Bremsventils 14 wird Druckluft als Steuermittel in die beiden Steuerleitungen 15 und 16 eingesteuert. Über diese Leitungen werden alle Steuerkammern 17, 18, 19 und 20 der beiden Relaisventile 10 und 11 mit Steuermittel beschickt. Die Relaisventile 10 und 11 werden umgestellt, und sie lassen dann Druckluft aus den Druckmittel-Quellen 7 und 8 auf kurzem Wege zu den Bremszylindern 22, 23, 24 und 25 gelangen.

Sowohl durch die übergreifende Ansteuerung der beiden Relaisventile, d. h. durch die zusätzliche Ansteuerung des einen Relaisventils vom jeweils anderen Kreis und durch die Zweikreisigkeit der gesamten Anlage ist diese Ansteuerung weitgehend ausfallsicher, denn bei Ausfall eines Steuerkreises werden beide Relaisventile 10 und 11 vom verbleibenden, intakten Kreis angesteuert und umgesteuert.

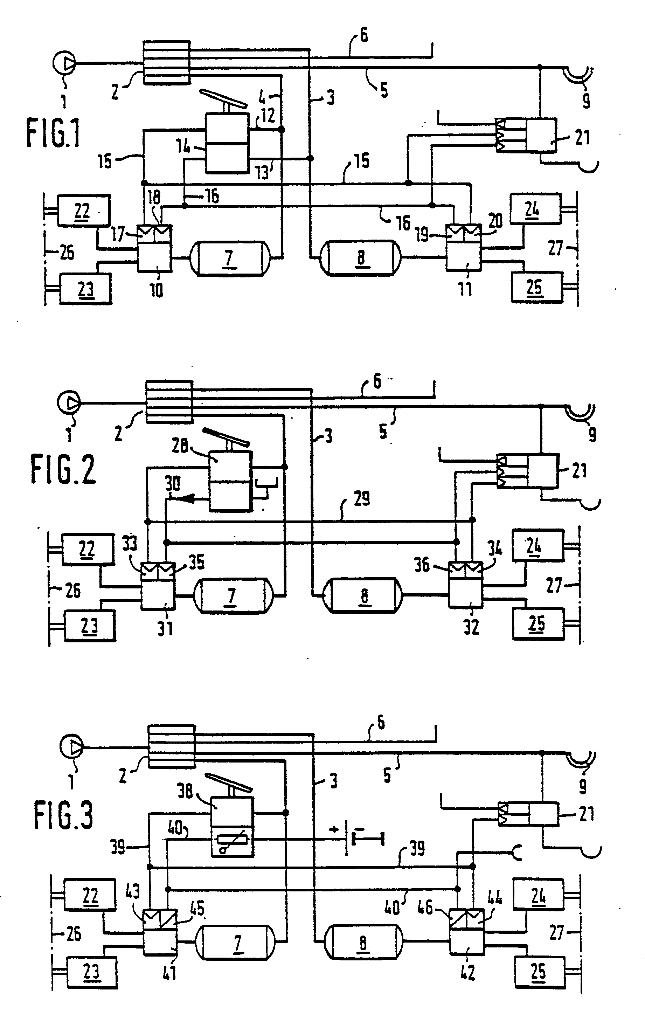

Die Figur 2 zeigt eine ähnliche Bremsanlage wie die Figur 1, nur daß hier der eine Bremskreis mit hydraulischem Steuermittel angesteuert wird. Entsprechende Teile tragen deshalb die gleichen Bezugszeichen. Ein gemischter Mehrkreis-Druckgeber 28 steuert in eine Steuerleitung 29 Druckluft als Steuermittel und in eine andere Steuerleitung 30 Hydraulik als Steuermittel ein. Jedes Relaisventil 31 bzw. 32 hat eine Druckluft-Steuerkammer 33 bzw. 34 und eine Hydraulik-Steuerkammer 35 bzw. 36. Die Wirkungsweise dieser Anlage entspricht weitgehend der nach der Figur 1, nur daß hier die eine Ansteuerung mit Hydraulik als Steuermittel durchgeführt wird.

In der Figur 3 ist eine Bremsanlage dargestellt, deren einer Bremskreis mit Druckluft und deren anderer Bremskreis mit elektrischem Strom angesteuert wird. Ein gemischter Mehrkreis-Druckgeber 38 steuert in eine Steuerleitung 39 Druckluft als Steuermittel und in eine andere Steuerleitung 40 eine elektrische Größe als Steuermittel ein. Jedes Relaisventil 41 bzw. 42 hat eine Druckluft-Steuerkammer 43 bzw. 44 und eine mit einem Magnetventil bestückte Magnet-Steuerkammer 45 bzw. 46. Auch die Wirkungsweise dieser Anlage entspricht weitgehend der nach Figur 1 und 2, nur daß hier eine elektrische Ansteuerung durchgeführt wird.

Es ist natürlich auch möglich, eine Hydraulisch-Elektrische Ansteuerung durchzuführen. Außerdem liegt es im Rahmen der Erfindung, die gesamte Relaisventil-Ansteuerung drei- oder vierkreisig durchzuführen, auch mit der erfindungs-

gemäßen jeweils « übergreifenden » Steuerung.

## Patentanspruch

Druckmittel-Bremsanlage für Fahrzeuge mit Aufteilung in zwei oder mehr Bremskreise und Zuordnung je einer Druckmittel-Quelle und je eines dieser nachgeschalteten, bei Bremsbetätigung mit einem Steuermittel ansteuerbaren und mit einer zur Einleitung des Steuermittels bestimmten Steuerkammer versehenen Relaisventils, wobei als Bremswertgeber ein Mehrkreis-Bremswertgeber verwendet ist und an jedem Relaisventil je nach der Anzahl der Kreise zwei oder mehr Steuerkammern für die Ansteuermittel vorgesehen sind, wobei die verschiedenen Steuerkammern der Relaisventile an jeweils beide Einzel-Steuerteile des Mehrkreis-Bremswertgebers angeschlossen und in jeweils die Bremskreise übergreifender Steuerung ansteuerbar sind, dadurch gekennzeichnet, daß jedem Relaisventil (10, 11 ; 31, 32 ; 41, 42) zwei gesonderte Steuerkammern (17, 18, 19, 20 ; 33, 34, 35, 36 ; 43, 44, 45, 46) zugeordnet sind, wobei die jeweiligen Steuerkammern (17, 20 ; 18, 19 ; 33, 34 ; 35, 36 ; 43, 44 ; 45, 46) eines Steuerkreises über eine Ansteuermittelleitung (15, 16, 29, 30, 39, 40) miteinander verbunden sind und daß der Mehrkreisbremswertgeber (14, 28, 38) die einzelnen Steuerkreise gleichzeitig mit unterschiedlichen Ansteuermitteln beaufschlagt, von denen zumindest zwei aus der Gruppe der hydraulischen, pneumatischen oder elektrischen Ansteuermittel ausgewählt sind.

## Claim

Pressure medium brake system for vehicles with separation into two or more brake circuits and assignment of a pressure medium source each and of a relay valve each, which is connected downstream of the latter, can be actuated upon brake application by a control medium and is provided with a control chamber intended for introduction of the control medium, the brake value pick-up used being a multiple-circuit brake value pick-up and two or more control chambers for the actuation media being provided at each relay valve, depending on the number of circuits, the various control chambers of the relay valves being connected in each case to both individual control parts of the multiple-circuit brake value pick-up and capable of being actuated in the control overlapping in each case the brake circuits, characterized in that each relay valve (10, 11 ; 31, 32 ; 41, 42) is assigned two separate control chambers (17, 18, 19, 20 ; 33, 34, 35, 36 ; 43, 44, 45, 46), the respective control chambers (17, 20 ; 18, 19 ; 33, 34 ; 35, 36 ; 43, 44 ; 45, 46) of a control circuit being connected to each other via an actuation medium line (15, 16, 29, 30, 39, 40) and in that the multiple-circuit brake value pick-up (14, 28, 38) simultaneously applies different actuation media to the individual control circuits, of which media at least two are selected from the group of hydraulic, pneumatic or electrical actuation media.

## Revendication

Installation de freinage à fluide de pression, pour véhicules, avec partage en deux ou davantage de circuits de freinage et avec coordination à chaque circuit d'une source de fluide de pression et d'une soupape relais prévue à la suite de cette source, qui est pilotée, en cas d'actionnement des freins, par un milieu de commande et est pourvue d'une chambre de commande destinée à l'introduction du milieu de commande, le générateur de valeur de freinage utilisé étant un générateur de valeur de freinage à plusieurs circuits et chaque soupape relais présentant deux ou davantage de chambres de commande pour les milieux de commande, suivant le nombre de circuits, les différentes chambres de commande des soupapes relais étant raccordées chaque fois aux deux parties de commande individuelles du générateur de valeur de freinage à plusieurs circuits et pouvant être pilotées dans un système de commande hiérarchiquement supérieur aux circuits de freinage, caractérisée en ce que deux chambres de commande séparées (17, 18, 19, 20 ; 33, 34, 35, 36 ; 43, 44, 45, 46) sont coordonnées à chaque soupape relais (10, 11 ; 31, 32 ; 41, 42), les chambres de commande (17, 20 ; 18, 19 ; 33, 34 ; 35, 36 ; 43, 44 ; 45, 46) appartenant à un circuit de commande étant reliées entre elles par une canalisation de milieu de pilotage (15, 16, 29, 30, 39, 40), et que le générateur de valeur de freinage à plusieurs circuits (14, 28, 38) est capable de soumettre les différents circuits de commande simultanément à des milieux de pilotage différents dont au moins deux milieux de pilotage sont choisis dans le groupe comprenant le liquide hydraulique sous pression, l'air comprimé et le courant électrique.

FIG.1

FIG.2

FIG.3